# EUROPÄISCHE PATENTSCHRIFT

(11) **EP 1 008 836 B1**
(45) Veröffentlichungstag und Bekanntmachung des Hinweises auf die Patenterteilung: **01.09.2004**
(21) Anmeldenummer: 98123660.7
(22) Anmeldetag: 11.12.1998
(51) Int. Cl.: G01D 11/24

(54) **Transmittergehäuse**
Transmitter housing
Boîtier pour un transmetteur

(43) Veröffentlichungstag der Anmeldung: 14.06.2000
(73) Patentinhaber: Endress + Hauser GmbH + Co. KG., 79689 Maulburg (DE)
(72) Erfinder: Rosskopf, Bernd, 79650 Schopfheim (DE); Vahid-Yousefnia, Amir, 79211 Denzlingen (DE)
(74) Vertreter: Andres, Angelika

(56) Entgegenhaltungen:
- EP-A- 0 585 760
- EP-A- 0 875 736
- WO-A-96/06338
- DE-U- 8 418 488
- DE-U- 29 718 245
- FR-A- 2 698 492

## Beschreibung

Die Erfindung betrifft ein Transmittergehäuse.

Transmitter werden in fast allen Bereich der Meß- und Regeltechnik eingesetzt. Es besteht eine Vielzahl von Einsatzmöglichkeiten, sowohl in der Lagerhaltung als auch in der verarbeitenden Industrie, z.B. in der Chemie, in der Lebensmittelindustrie und in der Ölindustrie.

Typischerweise werden Sensoren, z.B. Druck-, Differenzdruck-, Füllstands- und/oder Durchflußmeßaufnehmer, eingesetzt, die eine physikalische Größe erfassen und ein dazu proportionales Sensorsignal einem Transmitter zuführen. Sensor und Transmitter sind häufig in einem Gerät zusammengefaßt, das sowohl den Meßaufnehmer als auch die Transmitterelektronik umfaßt. Im Transmitter wird das Meßsignal in ein über größere Distanzen übertragbares Meßsignal umgewandelt. Oft wird das Sensorsignal im Transmitter zusätzlich einer Signalverarbeitung unterworfen, die z.B. der Bestimmung der gewünschten Meßgröße, der Eliminierung oder Kompensation von Meßfehlern und/oder der Verbesserung der Signalqualität, z.B. durch Rauschfilter, dient.

Es sind regelmäßig Kabeleinführungen vorgesehen, durch die hindurch externe Leitungen in den Transmitter einzuführen sind und die über das Transmittergehäuse hinaus vorstehen. Herkömmliche Transmittergehäuse sind einteilig und weisen einen Deckel auf. Bei geöffnetem Deckel sind die durch die Kabeleinführungen eingeführten Leitungen zugänglich. Der elektrische Anschluß des Transmitters, z.B. an eine Versorgung, an unidirektionale Signalleitungen und/oder an bidirektionale Kommunikationsleitungen erfolgt bei geöffnetem Deckel. Dabei ist eine im Gehäuse angeordnete Elektronik schutzlos den Einflüssen der Umgebung ausgesetzt. Es besteht z.B. die Gefahr, daß Feuchtigkeit die Elektronik angreift und/oder daß die Elektronik mechanisch beschädigt wird. Diese Gefahren sind besonders dann groß, wenn Transmitter im Freien, z.B. bei Regen oder Schnee, aufgebaut werden, oder wenn sie in Anlagen, in denen aggressive, abrasive oder ätzende Güter eingesetzt oder verarbeitet werden, eingesetzt werden.

Im Deutschen Gebrauchsmuster DE-297 18 245- U1 ist ein Transmitter mit einem Gehäuse beschrieben, bei dem ein Anschlußbereich von einem Elektronikbereich getrennt angeordnet ist. Der Anschlußbereich und ein Bereich mit Justiereinrichtungen sind von einem separat abnehmbaren Deckel abgedeckt, um eine einfache Austauschbarkeit des Gehäuses und eine einfache Justage bei abgenommenen Deckel zu ermöglichen. Bei abgenommenen Deckel liegt jedoch ein Stecker, über den die Elektronik kontaktiert wird, frei und ist vor Umwelteinflüssen nur unzureichend geschützt.

Im Deutschen Gebrauchsmuster DE-84 18 488 U1 ist ein Transmitter mit einem speziellen Gehäuse beschrieben, bei dem ein Stecker-Anschlußteil im Sinne einer Haube auf dem Gehäuse aufgesetzt ist. Ein Gegenstecker zum Anschluß des Transmitters kann in den Stecker-Anschlußteil eingesteckt werden und mit diesem und dem Gehäuse mechanisch sicher und dicht verbunden werden. Ohne eingesteckten Gegenstecker liegt der Stecker-Anschlußteil offen und ist nicht vor schädlichen Umwelteinflüssen geschützt.

In der Europäischen Patentanmeldung EP-0875 736-A1 ist wiederum ein anderes Gehäuse beschrieben, bei dem ein Anschlußstecker von einem separat abnehmbaren Deckel abgedeckt wird. Auch hier ist der Anschlußstecker bei abgenommenen Deckel nur unzureichend vor schädlichen Umwelteinflüssen geschützt.

In der Europäischen Patentanmeldung EP-0585 760-A1 ist ein Transmitter beschrieben, bei dem ein photoelektrischer Sensor in einem separaten Gehäuseteil auf eine Art Grundgehäuse gesetzt wird. Eine Verbindung des Sensors mit einer im Grundgehäuse befindlichen Elektronik wird mittels einer Steckverbindung realisiert. Die Steckverbindung selbst ist so ausgelegt, daß sie zwei um 10° versetzte Einbaulagen des Sensors erlaubt. Ohne eingesteckten Gegenstecker des Sensorteils liegt der Stecker des Grundgehäuses jedoch offen und ist schädlichen Umwelteinflüssen gegenüber nicht abgeschirmt.

Es ist daher eine Aufgabe der Erfindung, ein Transmittergehäuse anzugeben, bei dem die Transmitterelektronik auch während des elektrischen Anschließens des Transmitters vor Umwelteinflüssen geschützt ist.

Hierzu besteht die Erfindung in einem Transmittergehäuse mit einem Gehäuse (1) zur Aufnahme einer Transmitterelektronik und einem Anschlußgehäuse (3), in dem mit externen Leitungen verbindbare elektrische Anschlüsse vorgesehen sind und das mit dem Gehäuse (1) mechanisch lösbar verbunden ist, bei dem zwischen dem Gehäuse (1) und dem Anschlußgehäuse (3) eine Steckverbindung (9) vorgesehen ist, über die die Transmitterelektronik mit den Anschlüssen verbindbar ist, dadurch gekennzeichnet, daß der Transmitter über eine Busleitung ansprechbar ist, die Busleitungen durch das Anschlußgehäuse (3) hindurch führen, im Anschlußgehäuse (3) Abzweigungen von jeder Busleitung zur Steckverbindung (9) vorgesehen sind, wobei die Anschlüsse im Inneren des Anschlußgehäuses (3) angeordnet sind und das Anschlußgehäuse (3) einen zu öffnenden Deckel aufweist, durch den die Anschlüsse zugänglich sind.

Gemäß einer Ausgestaltung der Erfindung ist zwischen dem Gehäuse und dem Anschlußgehäuse eine Dichtung zum Schutz der Steckverbindung vorgesehen.

Gemäß einer weiteren Ausgestaltung ist am Gehäuse eine Flammendurchschlagperre vorgesehen.

Gemäß einer weiteren Ausgestaltung ist ein in dem Anschlußgehäuse verbleibender Hohlraum mit einer Vergußmasse ausgefüllt.

Gemäß einer weiteren Ausgestaltung ist im Anschlußgehäuse eine Bustreiberschaltung angeordnet.

Ein Vorteil der Erfindung besteht darin, daß das Gehäuse mitsamt der Transmitterelektronik bei Bedarf ausgetauscht werden kann, ohne daß erneut ein elektrischer Anschluß des Transmitters erfolgen muß. Dies kann z.B. beim Austausch von defekten Geräten oder bei der Umrüstung auf modernere Transmitter erhebliche Kosteneinsparungen bewirken.

In einigen Fällen ist eine regelmäßge Wartung der Transmitter erforderlich. Dies ist besonders umständlich und aufwendig, wenn Transmitter an schlecht zugänglichen Orten oder in rauhen Umgebungen eingesetzt sind. Bei dem erfindungsgemäßen Transmittergehäuse kann das Gehäuse mit der Transmitterelektronik auf einfache Weise vom Anschlußgehäuse getrennt werden und an einem dafür besser geeigneten Ort gewartet werden.

Die Erfindung und weitere Vorteile werden nun anhand der Figuren der Zeichnung, in denen zwei Ausführungsbeispiele dargestellt sind, näher erlautert; gleiche Elemente sind in den Figuren mit denselben Bezugszeichen versehen.
- Fig. 1 zeigt: ein erfindungsgemäßes Transmittergehäuse,
- Fig. 2 zeigt: Einzelteile des Transmittergehäuses von Fig. 1 in einer Explosionsdarstellung und
- Fig. 3 zeigt: ein weiteres Transmittergehäuse, bei dem Gehäuse und Anschlußgehäuse über Klemmbügel verbunden sind.

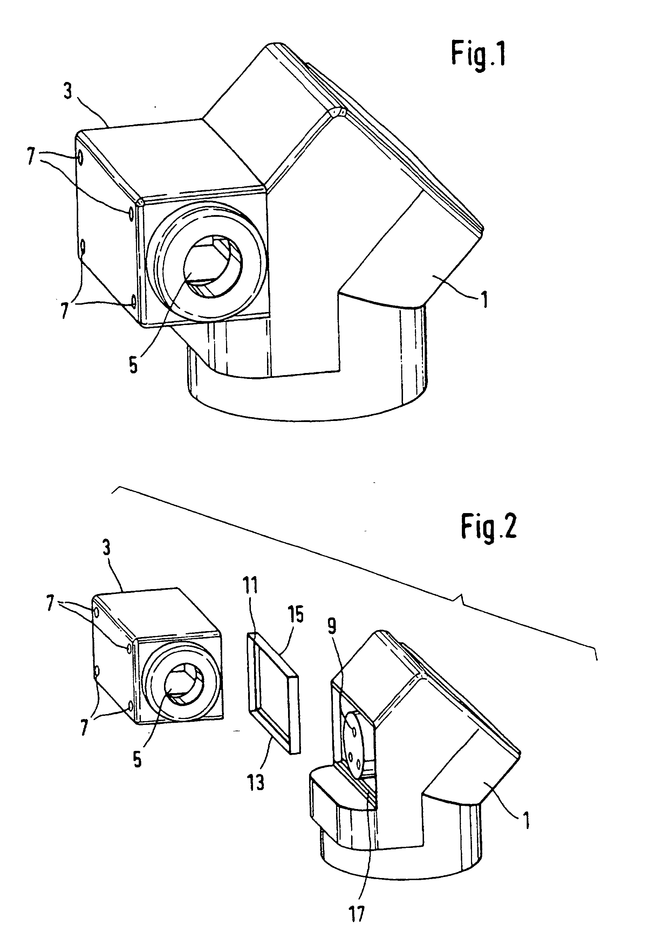

In Fig. 1 ist ein Transmittergehäuse für einen Transmitter dargestellt. Es weise ein Gehäuse 1 zur Aufnahme einer in Fig. 1 nicht dargestellten Transmitterelektronik auf. Das Gehäuse 1 ist mit einem Anschlußgehäuse 3 verbunden. Zusammen bilden Gehäuse 1 und Anschlußgehäuse 3 das Transmittergehäuse.

Das Anschlußgehäuse 3 weist Öffnungen 5 auf, durch die externe Leitungen ist das Anschlußgehäuse 3 hinein geführt werden können. Externe Leitungen sind Busleitungen über die gemäß bus-spezifischen Übertragungsprotokollen, z.B. CAN-Bus-, Feldbus- oder Profibus-Übertragungsprotokollen. Daten Informationen, Meßwerte, Alarmsignale etc. übertragbar sind.

Das Gehäuse 1 ist mechanisch Lösbar mit dem Anschlußgehäuse 3 zu verbinden. Bei dem in Fig. 1 dargestellten Ausführungsbeispiel erfolgt die mechanische Befestigung über Schrauben 7, die durch das Anschlußgehäuse 3 hindurch das Gehäuse 1 geschraubt sind.

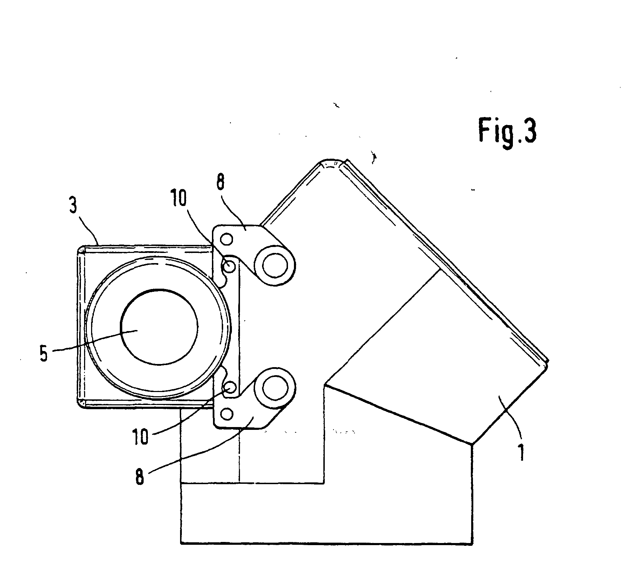

Bei dem in Fig. 3 dargestellten Ausfürhungsbeispiel erfolgt die Befestigung mittels Klemmbugeln 8. Die Klemmbugel 8 sind um eine Achse schwenkbar am Gehäuse 1 befestigt und weisen an deren freiem Ende jeweils einen Haken auf. Am Anschlußehäuse 3 sind vorstehende Nasen 10 vorgesehen, hinter die die Haken, wie in Fig. 3 dargestellt, im montierten Zustand eingreifen.

Andere Arten der mechanischen Befestigung sind ebenfalls einsetzbar. So kann die mechanische Verbindung z.B. über Rastvorrichtungen erfolgen.

In dem Anschlußgehäuse 3 sind elektrische Anschlüsse vorgesehen, die mit den externen Leitungen verbindbar sind.

Hierzu sind zwei Varianten möglich. Zum einen kann das Anschlußgehäuse 3 einen zu öffnenden Deckel aufweisen, durch den der Innenraum des Anschlußgehäuses 3 zugänglich ist. Bei geöffnetem Deckel können dann die externen Leitungen an die elektrischen Anschlüsse angeschlossen werden. Zum anderen kann der Anschluß, wenn Gehäuse 1 und Anschlußgehäuse 3 voneinander getrennt sind, durch eine dem Gehäuse 1 zugewandte Öffnung des Anschlußgehäuses 3 hindurch erfolgen.

Vorzugsweise ist ein in dem Anschlußgehäuse 3 verbleibender Hohlraum mit einer Vergußmasse ausgefüllt. Diese Vergußmasse bietet Schutz vor Feuchtigkeit, die andernfalls in das Anschlußgehäuse 3 eindringen und durch die Anschlüsse und die Steckverbindung 9 zur Transmitterelektronik gelangen könnte. Hierzu wird, z.B. nachdem der elektrische Anschluß der externen Leitungen an die Anschlüsse erfolgt ist, Vergußmasse durch den Deckel bzw. die Öffnung in flüssigem Zustand in das Anschlußgehäuse 3 eingebracht und härtet dort aus.

Zwischen dem Gehäuse 1 und dem Anschlußgehäuse 3 ist eine Steckverbindung 9 vorgesehen über die die Transmitterelektronik mit den Anschlüssen verbindbar ist. Die Steckverbindung 9 weist einen Stecker und eine Steckdose auf. Dabei ist es völlig unerheblich, ob am Gehäuse 1 der Stecker und am Anschlußgehäuse 3 die Steckdose angeordnet ist oder umgekehrt. Es wird in der nachfolgenden Beschreibung der Fall angenommen, daß der Stecker am Anschlußgehäuse 3 und die Steckdose am Gehäuse 1 angeordnet ist.

Die Transmitterelektronik ist im Gehäuse 1 elektrisch an einen und/oder mehrere Pole der Steckdose angeschlossen. Im Anschlußgehäuse sind die einzelnen Anschlüsse elektrisch an die korrespondierenden Pole des Steckers angeschlossen.

Bei Transmitters, die über Busleitungen ansprechbar sind, führen die Busleitungen vorzugsweise durch das Anschlußgehäuse 3 hindurch und im Anschlußgehäuse 3 sind Abzweigungen von jeder Busleitung zur Steckverbindung 9 vorgesehen. Das bietet den Vorteil, daß das Gehäuse 1, z.B. zur Wartung, abgenommen werden kann, ohne daß die Busleitung dadurch unterbrochen ist. Funktion und Betrieb von nachfolgenden an die gleichen Busleitungen angeschlossenen Geräten werden in keiner Weise gestört oder beeinträchtigt. Insb. bleibt dem Anwender die bei herkömmlichen Transmittern erforderliche Installation einer Abzweigung bzw. Überbrückung für die Busleitungen erspart.

Vorzugsweise ist in dem Anschlußgehäuse 3 eine Bustreiberschaltung vorgesehen. Über die Bustreiberschaltung erfolgt die Kommunikation des Transmitters über den Bus. Die Bustreiberschaltung kann eine galvanische Trennung zwischen Transmitter und Bus enthalten und über die Busleitungen über weitere Strecker zu ubertragende Signale verstarken.

Zum Schutz der Steckverbindung 9 ist zwischen dem Gehäuse 1 und dem Anschlußgehäuse 3 eine Dichtung 11 vorgesehen. Wie in Fig. 2 dargestellt, ist dies z.B. eine Formdichtung, die eine umlaufende Lippe 13 aufweist, die zur Vorfixierung in eine formgleiche Nut im Anschlußgehäuse 3 einzubringen ist. Wenn im montierten Zustand Gehäuse 1 und Anschlußgehäuse 3 mechanisch miteinander verbunden sind, liegt eine der Lippe 13 gegenüberliegende Stirnfläche 15 der Dichtung 11 auf einer Absatzfläche 17 im Gehäuse 1 auf. Die Dichtung 11 wird durch die mechanische Befestigung von Gehäuse 1 und Anschlußgehäuse 3, in dem gezeigten Ausführungsbeispiel also durch die Schrauben 7, zwischen Nut und Absatzfläche 17 eingespannt und dichtet dadurch den Innenraum zwischen dem Gehäuse 1 und dem Anschlußgehäuse 3, in dem sich die Steckverbindung 9 befindet ab.

Vorzugsweise ist am Gehäuse 1 eine Flammendurchschlagperre vorgesehen. Die Flammendurchschlagsperre dient dazu, zu verhindern, daß ein im Inneren des Gehäuses 1 auftretender Funke und/oder eine Flamme nach außen dringt. Eine Flammendurchschlagsperre ist z.B. immer dann erforderlich, wenn der Transmitter in explosionsgefährdeten Bereichen eingesetzt wird. In solchen Bereichen kann bereits ein kleiner Funke zu einer Explosion führen, die verheerende Folgen haben kann.

In den meisten Ländern gibt es Sicherheitsvorschriften, die je nach Art der Gefahrenzone Konstruktionsvorschriften für Flammendurchschlagsperren vorgeben. Ein Beispiel für eine solche Vorschrift ist die Deutsche Norm DIN EN 50018 aus dem Jahr 1994. Sie enthält Vorschriften für elektrische Betriebsmittel für explosionsgefährdete Bereiche mit der Schutzklasse Druckfeste Kapselung. Sie umfaßt unter anderem Konstruktionsvorschriften für Spaltlangen, Spaltbreiten, Gewindespalte und Dichtungen.

Im vorliegenden Fall kann die Flammendurchschlagsperre z.B. darin bestehen, daß sämtliche Leitungen von der Transmitterelektronik durch direkt vor der Steckdose angeordnete, entsprechend den genannten Vorschriften dimensionierte Durchführungen geführt sind. Genauso könnte die Steckdose ensprechend diesen Vorschriften ausgebildet sein, so daß durch die Steckdose kein Funke bzw. keine Flamme nach außen dringen kann.

## Patentansprüche

1. Transmittergehäuse mit einem Gehäuse (1) zur Aufnahme einer Transmitterelektronik und einem Anschlußgehäuse (3), in dem mit externen Leitungen verbindbare elektrische Anschlüsse vorgesehen sind und das mit dem Gehäuse (1) mechanisch lösbar verbunden ist, bei dem zwischen dem Gehäuse (1) und dem Anschlußgehäuse (3) eine Steckverbindung (9) vorgesehen ist, über die die Transmitterelektronik mit den Anschlüssen verbindbar ist, **dadurch gekennzeichnet, daß** der Transmitter über eine Busleitung ansprechbar ist, die Busleitungen durch das Anschlußgehäuse (3) hindurch führen, im Anschlußgehäuse (3) Abzweigungen von jeder Busleitung zur Steckverbindung (9) vorgesehen sind, wobei die Anschlüsse im Inneren des Anschlußgehäuses (3) angeordnet sind und das Anschlußgehäuse (3) einen zu öffnenden Deckel aufweist, durch den die Anschlüsse zugänglich sind.

2. Transmittergehäuse nach Anspruch 1, bei dem zwischen dem Gehäuse (1) und dem Anschlußgehäuse (3) eine Dichtung (11) zum Schutz der Steckverbindung (9) vorgesehen ist.

3. Transmittergehäuse nach Anspruch 1, bei dem am Gehäuse (1) eine Flammendurchschlagsperre vorgesehen ist.

4. Transmittergehäuse nach Anspruch 1, bei dem ein in dem Anschlußgehäuse verbleibender Hohlraum mit einer Vergußmasse ausgefüllt ist.

5. Transmittergehäuse nach Anspruch 1, bei dem im Anschlußgehäuse (3) eine Bustreiberschaltung angeordnet ist.

## Claims

1. A transmitter housing comprising a housing (1) for accommodating transmitter electronics, and a terminal housing (3) in which are provided electrical terminals connectable to external lines and which is mechanically detachably connected to the housing (1), wherein a plug connection (9), by means of which the transmitter electronics are connectable to the terminals, is provided between the housing (1) and the terminal housing (3), **characterised in that** the transmitter is operable via a bus line, the bus lines lead through the terminal housing (3), and branches are provided in the terminal housing (3) from each bus line to the plug connection (9), the terminals being arranged inside the terminal housing (3) and the terminal housing (3) having an openable cover, through which the terminals are accessible.

2. A transmitter housing according to claim 1, wherein a seal (11) for protecting the plug connection (9) is provided between the housing (1) and the terminal housing (3).

3. A transmitter housing according to claim 1, wherein a flashover barrier is provided on the housing (1).

4. A transmitter housing according to claim 1, wherein a cavity remaining in the terminal housing is filled with a casting compound.

5. A transmitter housing according to claim 1, wherein a bus driver circuit is arranged in the terminal housing (3).

## Revendications

1. Boîtier de transmetteur avec un boîtier (1), destiné à réceptionner une électronique de transmetteur et avec un boîtier de raccordement (3), dans lequel on a prévu des raccords électriques susceptibles d'être reliés avec des conducteurs externes et lequel est relié de façon mécaniquement amovible avec le boîtier (1) ; un connecteur (9) étant prévue entre le boîtier (1) et le boîtier de raccordement (3) grâce auquel l'électronique de transmetteur est relié avec les raccords, **caractérisé en ce que** le transmetteur est susceptible d'être contacté via une ligne de bus ; les lignes de bus traversant le boîtier de raccordement (3), **en ce qu'**on a prévu des branchements à partir de chaque ligne de bus vers le connecteur (9) dans le boîtier de raccordement (3) ; les raccordements étant disposés à l'intérieur du boîtier de raccordement (3) et le boîtier de raccordement (3) présentant un couvercle susceptible d'être ouvert, par lequel on peut avoir accès aux raccordements.

2. Boîtier de transmetteur selon la revendication 1, pour lequel entre le boîtier (1) et le boîtier de raccordement (3), on a prévu un joint d'étanchéité (11) destiné à protéger le connecteur (9).

3. Boîtier de transmetteur selon la revendication 1, pour lequel on a prévu sur le boîtier (1) un dispositif d'arrêt des flammes.

4. Boîtier de transmetteur selon la revendication 1, pour lequel une chambre creuse restant dans le boîtier de raccordement est remplie d'une masse de remplissage.

5. Boîtier de transmetteur selon la revendication 1, pour lequel on a disposé dans le boîtier de raccordement (3) un circuit pilote de bus.
